# EUROPEAN PATENT APPLICATION

(11) **EP 4 604 089 A1**
(43) Date of publication of application: **20.08.2025**
(21) Application number: 23877132.3
(22) Date of filing: 25.09.2023
(51) Int. Cl.: G08B 21/00, G08B 21/10, G08B 27/00, G08B 31/00, G01C 21/26, G01C 21/34, H04L 67/12, H04L 67/52, H04L 67/55, G06Q 50/10, H04W 4/48, H04W 4/90

(54) **INFORMATION PROCESSING SYSTEM, INFORMATION PROCESSING DEVICE, CONTROL DEVICE, AND PROGRAM**

(30) Priority: 12.10.2022 JP 2022164370; 07.11.2022 JP 2022178315; 11.11.2022 JP 2022181229; 14.11.2022 JP 2022182101; 11.01.2023 JP 2023002662; 16.01.2023 JP 2023004745
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/034776
(87) International publication number: WO 2024/080126

(57) **Abstract**

A control device outputs a request signal to an information processing device every time a predetermined time elapses. **In** a case in which the information processing device receives the request signal output from the control device, the information processing device predicts occurrence of an event related to a life-threatening crisis on the basis of various types of information stored in a storage unit. The information processing device determines that the event will occur in a case in which a probability of the occurrence of the event is a predetermined value or more, and notifies at least one of the control device and the plurality of terminals of a determination result.

## Description

### Technical Field

The present disclosure relates to an information processing system, an information processing device, a control device, and a program.

### Background Art

Patent Literature 1 discloses a vehicle having an autonomous driving function.

### Citation List

### Patent Literature

Patent Literature 1: Japanese Patent Application Laid-Open (JP-A) No. 2022-035198

### SUMMARY OF INVENTION

### Solution to Problem

According to an embodiment of the present disclosure, an information processing system is provided. The information processing system includes a central brain mounted on a vehicle; an information accumulation unit on a cloud that stores information regarding a life-threatening crisis; and a prediction unit on the cloud that predicts occurrence of an event related to the life-threatening crisis on the basis of information in the information accumulation unit, in which the central brain makes an inquiry to the prediction unit every nanosecond, and, in a case in which the prediction unit determines that the event related to the life-threatening crisis will occur, the prediction unit reports a determination result to the vehicle and a contact address registered in advance.

According to an embodiment of the present disclosure, an information processing device is provided. The information processing device is an information processing device in an information processing system including a control device mounted on a vehicle, the information processing device, and a plurality of terminals, in which the control device outputs a request signal to the information processing device every time a predetermined time elapses, and the information processing device predicts occurrence of an event related to a life-threatening crisis on the basis of various types of information stored in a storage unit in a case in which the request signal output from the control device is received, and determines that the event will occur in a case in which a probability of occurrence of the event is a predetermined value or more, and notifies at least one of the control device and the plurality of terminals of a determination result.

The information processing device may be configured to further notify at least one of the control device and the plurality of terminals of information regarding an access point indicating an evacuation site for the vehicle.

According to an embodiment of the present disclosure, there is provided a program for causing a computer to function as the information processing device.

According to an embodiment of the present disclosure, there is provided a control device mounted on a vehicle, the control device including a first request unit that requests a prediction unit that is present in a general cloud that is connectable at all times and predicts occurrence of an event related to a life-threatening crisis to predict the occurrence of the event every time a predetermined time elapses; and a second request unit that requests a processing unit present in a private cloud to execute processing related to the event on at least one of an own device and a plurality of predetermined terminals in a case in which the event is predicted to occur by the prediction unit as a result of the request from the first request unit.

According to an embodiment of the present disclosure, there is provided an information processing system including the control device, the prediction unit, the processing unit, and the plurality of terminals.

According to an embodiment of the present disclosure, there is provided a program for causing a computer to function as the control device.

According to one aspect of the present disclosure, an information processing system is provided. The information processing system includes a control device mounted on a vehicle; an information accumulation unit on a cloud that stores information regarding a life-threatening crisis; a prediction unit on the cloud that receives an inquiry from the control device at predetermined time intervals and predicts occurrence of an event related to life-threatening information on the basis of information in the information accumulation unit; a crisis avoidance information generation unit that generates, in a case in which the prediction unit determines that the event related to the life-threatening crisis will occur, crisis avoidance information corresponding to the event related to the life-threatening crisis; and a notification unit that notifies the vehicle of a determination result and the crisis avoidance information generated by the crisis avoidance information generation unit in a case in which the prediction unit determines that the event related to the life-threatening crisis will occur.

The notification unit may also notify a contact address registered in advance of the determination result and the crisis avoidance information.

According to one aspect of the present disclosure, an information processing device is provided. The information processing device is an information processing device in an information processing system including a control device mounted on a vehicle and the information processing device, in which the control device outputs a request signal to the information processing device every time a predetermined time elapses, and the information processing device predicts occurrence of an event related to a life-threatening crisis on the basis of various types of information stored in a storage unit in a case in which the request signal output from the control device is received, and determines that the event will occur in a case in which a probability of the occurrence of the event is a predetermined value or more, and notifies the control device of a determination result and crisis avoidance information corresponding to the event related to the life-threatening crisis.

The information processing device may also notify a contact address registered in advance of the determination result and the crisis avoidance information.

According to one aspect of the present disclosure, there is provided a program for causing a computer to function as the information processing device.

According to one aspect of the present disclosure, an information processing device is provided. The information processing device includes a first prediction unit that predicts a degree of risk of occurrence of an event related to a life-threatening crisis; a second prediction unit that predicts a density of at least one of a vehicle and a person who possesses a mobile terminal on the basis of collected position information of at least one of the vehicle and the mobile terminal; and a notification unit that transmits notification information regarding a prediction result from the first prediction unit to at least one of the vehicle and the mobile terminal in a case in which the degree of risk of occurrence of the event predicted by the first prediction unit exceeds a first threshold, and decreases the first threshold in a case in which the density predicted by the second prediction unit exceeds a second threshold.

The first prediction unit predicts the degree of risk of occurrence of an event related to a life-threatening crisis. In this prediction, the degree of risk predicted generally increases as the time of occurrence of the event related to the life-threatening crisis approaches. In the first aspect, the density of at least one of the vehicle and the person possessing the mobile terminal is predicted, and the first threshold is decreased in a case in which the predicted density exceeds the second threshold. As a result, a notification of the notification information provided to at least one of the vehicle and the mobile terminal is performed earlier than in a case in which the first threshold is not decreased. Therefore, in a case in which the occurrence of an event related to a life-threatening crisis is predicted, it is possible to curb vehicles and people from being in a dense state.

In a case in which a request signal is received from the control device mounted on the vehicle, the first prediction unit predicts the degree of risk of the occurrence of an event related to a life-threatening crisis on the basis of information stored in a storage unit.

The information processing device can recognize a vehicle to which the notification information is to be transmitted, for example, a vehicle in an active state in which an occupant is in the vehicle and an ignition switch is turned on.

The notification information regarding the prediction result from the first prediction unit includes evacuation site information indicating an evacuation site for at least one of the vehicle and the person who possesses the mobile terminal.

The evacuation site information included in the notification information can guide at least one of the vehicle and the person who possesses the mobile terminal to evacuate to an appropriate evacuation site.

The second prediction unit predicts the density in units of each of a plurality of prediction areas formed by dividing a prediction target region, and the notification unit decreases the first threshold corresponding to a specific prediction area in which the density predicted by the second prediction unit exceeds the second threshold, and transmits notification information regarding the prediction result from the first prediction unit to at least one of the vehicle and the mobile terminal related to the specific prediction area in a case in which the degree of risk of the occurrence of the event predicted to occur by the first prediction unit exceeds the first threshold corresponding to the specific prediction area.

In a case in which the occurrence of an event related to a life-threatening crisis is predicted, it is possible to curb a situation in which vehicles and people are in a dense state in units of predicted areas smaller than the prediction target area.

According to one aspect of the present disclosure, an information processing system is provided. The information processing system includes the information processing device, the control device mounted on the vehicle, and the mobile terminal.

The information processing system can curb vehicles and people from being in a dense state in a case in which the occurrence of an event related to a life-threatening crisis is predicted.

According to one aspect of the present disclosure, a program is provided. The program causes a computer to execute processing including predicting a degree of risk of occurrence of an event related to a life-threatening crisis; predicting a density of at least one of a vehicle and a person who possesses a mobile terminal on the basis of collected position information of at least one of the vehicle and the mobile terminal; and transmitting notification information regarding a prediction result of the occurrence of the event related to the life-threatening crisis to at least one of the vehicle and the mobile terminal in a case in which the degree of risk of the occurrence of the event predicted to occur exceeds a first threshold, and decreasing the first threshold in a case in which the predicted density exceeds a second threshold.

The program can curb vehicles and people from being in a dense state in a case in which the occurrence of an event related to a life-threatening crisis is predicted.

The above summary of the disclosure does not enumerate all the necessary features of the present disclosure. A subcombination of these feature groups may also be disclosed.

### BRIEF DESCRIPTION OF DRAWINGS

Fig. 1 schematically shows an example of a functional configuration of an information processing system 10.
Fig. 2 schematically shows an example of a network configuration according to the present embodiment.
Fig. 3 schematically shows an example of a network configuration in a vehicle according to the present embodiment.
Fig. 4 schematically shows an example of a processing routine executed by an information processing device.
Fig. 5 is a schematic diagram of a Level 6 SOS.
Fig. 6 is a schematic diagram of a Level 6 SOS.
Fig. 7 schematically shows an example of a hardware configuration of a computer 1200 that functions as a control device 120, a central brain 120, a server 14, or a plurality of terminals 18A, 18B, and 18C.
Fig. 8 schematically shows an example of a functional configuration of an information processing system according to a second embodiment.
Fig. 9 schematically shows an example of a processing routine executed by a control device according to the second embodiment.
Fig. 10 schematically shows an example of a functional configuration of an information processing system according to a third embodiment.
Fig. 11 schematically shows an example of a processing routine executed by an information processing device according to the third embodiment.
Fig. 12 schematically shows an example of a functional configuration of an information processing system according to a fourth embodiment.
Fig. 13 schematically shows an example of a processing routine executed by an information processing device according to the fourth embodiment.

### DESCRIPTION OF EMBODIMENTS

Hereinafter, the present disclosure will be described through embodiments of the disclosure, but the following embodiments do not limit the disclosure according to the claims. Not all combinations of features described in the embodiments are essential to the disclosed solutions.

### [First Embodiment]

An information processing system of the present embodiment predicts in advance a crisis that poses a threat to the life of a person, and in a case in which the risk representing the crisis increases, the information processing system automatically notifies an owner of a vehicle and his/her family immediately. The information processing system of the embodiment always calculates an evacuation route of the vehicle, a time taken to reach a shelter, and the like, and notifies the owner of the vehicle and his/her family of the information at the time of the notification. The information processing system of the embodiment may contact an access point such as a shelter of the vehicle or the like in advance. In a case in which an access point is not fixed, the information processing system of the embodiment also calculates second and third access points, and notifies the owner of the vehicle and his/her family of places of the access points or the like.

Examples of the crisis that poses a threat to human life include the occurrence of an earthquake, a large fire, lightning, a typhoon, heavy snow, a storm, a tsunami, a missile, a nuclear explosion, and a war.

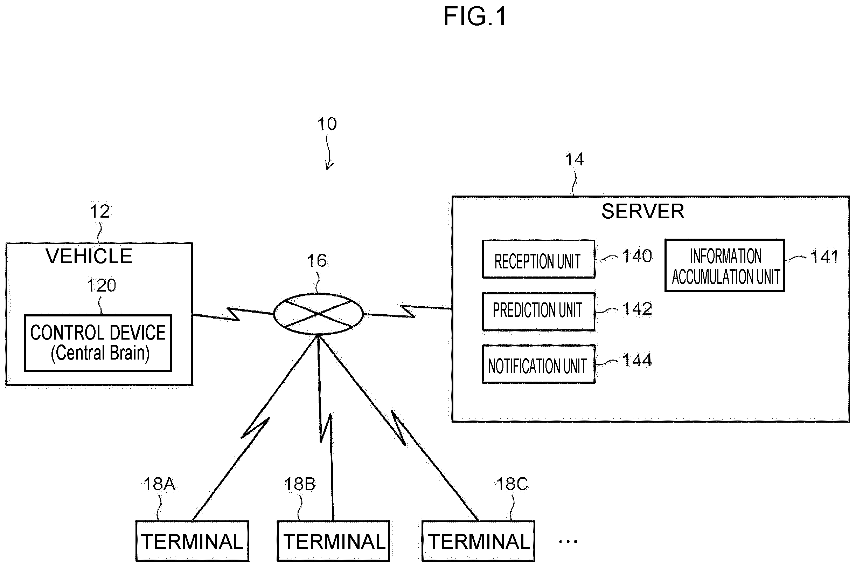

Fig. 1 is a schematic diagram of an example of an information processing system 10 according to the present embodiment. The information processing system 10 includes a control device 120 mounted on a vehicle 12, a server 14 which is an example of an information processing device, and a plurality of terminals 18A, 18B, and 18C. The control device 120, the server 14, and the plurality of terminals 18A, 18B, and 18C are communicatively connected via a communication line 16 such as the Internet.

The control device 120 is an example of a vehicle control device. Hereinafter, the control device 120 will be referred to as a central brain 120.

"Level 6" described below is a level representing autonomous driving, and corresponds to a level higher than Level 5 representing fully autonomous driving. Level 5 represents fully autonomous driving, but is at the same level as driving by a person, and there is still a probability that an accident or the like will occur. Level 6 represents a level higher than Level 5, and corresponds to a level at which a probability of the occurrence of an accident is lower than Level 5.

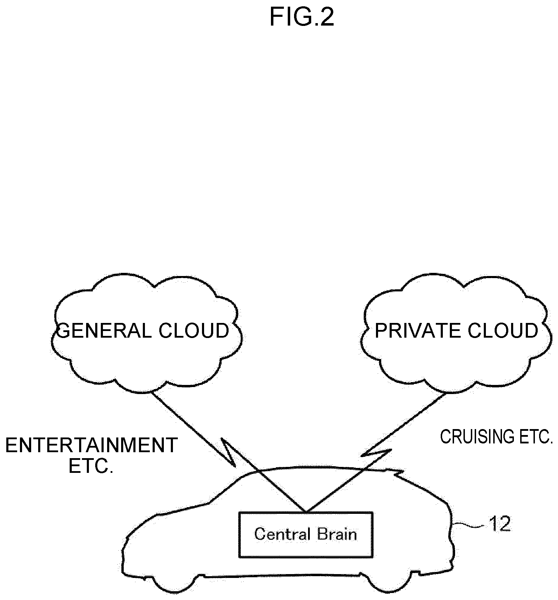

Fig. 2 is a diagram for describing a communication environment to which the central brain 120 according to the embodiment is connected. As shown in Fig. 2, the central brain 120 can switch between a general cloud and a private cloud as a communication destination. For example, the private cloud is realized by a virtual private network (VPN).

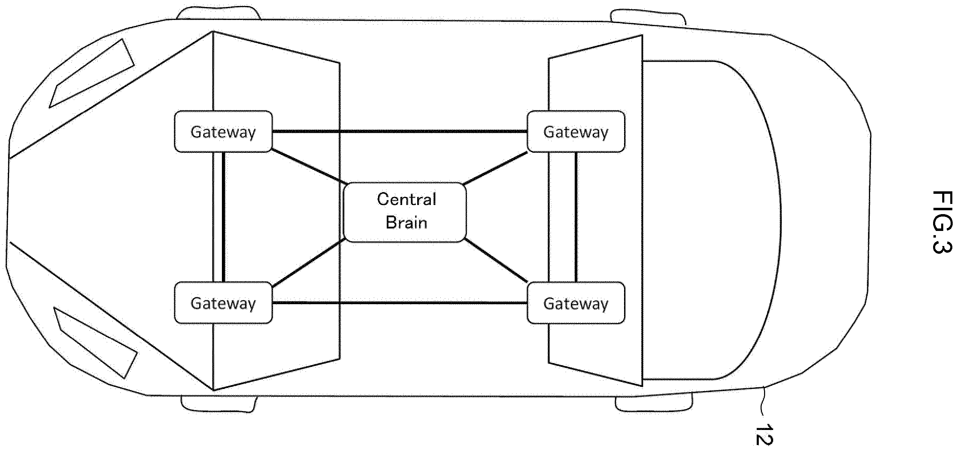

Fig. 3 is a diagram for describing a configuration of the central brain 120 in the vehicle 12. As shown in Fig. 3, a plurality of gateways are communicatively connected to the central brain 120. The central brain 120 is connected to an external cloud via a gateway. The central brain 120 is configured to be able to access an external cloud via the gateway. On the other hand, due to the presence of the gateway, the central brain 120 is configured to be not able to be directly accessed from the outside.

The central brain 120 outputs a request signal to the server 14 every time a predetermined time elapses. Specifically, the central brain 120 outputs a request signal indicating an inquiry to the server 14 every nanosecond.

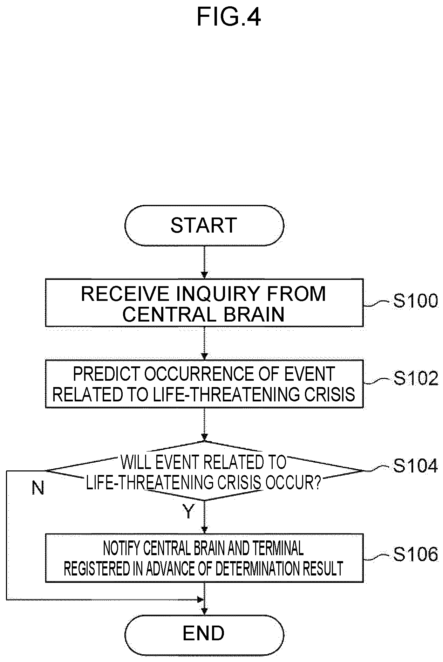

The server 14 repeatedly executes the flowchart shown in Fig. 4.

In step S100, a reception unit 140 of the server 14 receives a request signal output from the central brain 120.

An information accumulation unit 141 of the server 14 accumulates any information that is a precursor of an earthquake, a large fire, lightning, a typhoon, heavy snow, a storm, a tsunami, a missile, a nuclear explosion, a war, or the like at any time for 24 hours and 365 days. The information accumulation unit 141 is an example of a storage unit.

In step S102, in a case in which the request signal output from the central brain 120 is received, a prediction unit 142 of the server 14 predicts the occurrence of an event related to a life-threatening crisis on the basis of various types of information stored in the information accumulation unit 141.

In step S104, the prediction unit 142 of the server 14 determines whether or not an event related to a life-threatening crisis will actually occur on the basis of the prediction result in step S102. For example, the prediction unit 142 of the server 14 determines that the event will occur in a case in which the probability of the occurrence of the event related to the life-threatening crisis is a predetermined value or more.

The prediction unit 142 of the server 14 analyzes the information accumulated in the information accumulation unit 141 by using artificial intelligence (AI) to always calculate a timing and a probability of the occurrence of a life-threatening crisis. "Always" may be nanosecond. Since a sign of a life-threatening crisis may be known one hour or more before occurrence, this information may be used.

In step S106, in a case in which the prediction unit 142 determines that a certain event will occur, a notification unit 144 of the server 14 notifies at least one of the central brain 120 of the vehicle 12 and the plurality of terminals 18A, 18B, and 18C of the determination result. In this case, for example, the notification unit 144 of the server 14 may also notify the central brain 120 of the vehicle 12 and the plurality of terminals 18A, 18B, and 18C of the vehicle 12 of information regarding a candidate site of an access point that is an evacuation site for the vehicle 12.

The central brain 120 outputs information indicating that an event related to a life-threatening crisis will occur to a display device (not shown) or the like in the vehicle 12. An occupant in the vehicle 12 checks the information and goes to an access point or the like.

Each of the plurality of terminals 18A, 18B, and 18C is, for example, a terminal owned by a family member of an occupant of the vehicle 12. Each of the plurality of terminals 18A, 18B, and 18C outputs information indicating that an event related to a life-threatening crisis will occur to its own display device (not shown) or the like. A family member of the occupant checks the information and checks an access point or the like of the vehicle 12.

As described above, the server 14 notifies the vehicle 12 on which the central brain 120 is mounted and the plurality of terminals 18A, 18B, and 18C owned by members (for example, a family member or the like) registered in advance of the occurrence of the crisis. In this case, the server 14 may provide a notification of the degree of risk of the crisis, a route to a safe place, and the time taken to reach the safe place. The server 14 may provide a notification of an evacuation destination, a route, and an access time. The server 14 may make a phone call and make an appointment to an access destination, and may contact second and third candidate access points in a case in which the access destination cannot be contacted.

Since traffic information used by the central brain 120 is mission-critical information, the server 14 is connected to the completely private central brain 120 via a VPN, and is connected only to the central brain 120 with chip-to-chip level security. On the other hand, the central brain 120 connected to a cloud via a zone gateway can be always connected to general cloud information.

As described above, it is not possible to enter the central brain 120 from the gateway, but conversely, it is possible to ask other questions from the central brain 120. The central brain 120 may make an inquiry to a central brain of another vehicle.

As described above, the information processing system 10 according to the embodiment uses an AI technology to predict an occurrence probability and an occurrence timing of a life-threatening crisis such as a natural disaster or a nuclear power plant accident, and provides a push type SOS function to protect human life. Specifically, in the information processing system 10 according to the embodiment, the central brain 120 connected to the zone gateway accesses information of the public cloud, and performs a trial calculation every nanosecond in order to protect an owner of a smart car and his/her family members.

According to the information processing system 10 of the embodiment, all risks (for example, an earthquake, a fire, lightning, a typhoon, heavy snow, a heavy rain, a tsunami, a missile, a nuclear explosion, and a war) are predicted in advance, and a family is automatically notified in a case in which a risk increases. Specifically, the information processing system 10 of the embodiment activates PUSH SOS while calculating a timing at which an event occurs and the safety. The information processing system 10 performs simulation every nanosecond (for example, evacuation destinations, evacuation routes, and access times). The information processing system 10 according to the embodiment contacts an access point in advance and makes a reservation (for example, in a case in which the access point is not available, all risk calculations are performed for second, third, and more options).

In the information processing system 10 according to the embodiment, the central brain 120 makes an inquiry to the server 14 every nanosecond, but the present disclosure is not limited to such an example. For example, in a case in which the server 14 sequentially executes simulation (for example, every nanosecond) and a probability of risk occurrence is a predetermined value or more, a notification is provided to the central brain 120. In this case, although the server 14 cannot directly access the central brain 120 due to the presence of the gateway, in a case in which the probability of risk occurrence is a predetermined value or more, the server 14 adds information indicating an emergency to the notification, and the gateway passes the notification from the server 14 to the central brain 120 in a case in which the information indicating an emergency is added. Therefore, the gateway ascertains information indicating an emergency situation for transmitting the notification to the central brain 120 in advance.

As described above, in a case in which the server 14 sequentially executes the simulation and the probability of risk occurrence is the predetermined value or more, the central brain 120 is notified thereof, whereby the power consumption in the vehicle 12 can be reduced compared with a case in which the central brain 120 sequentially inquires of the server.

The information processing system 10 may switch between an inquiry from the central brain 120 to the server 14 every nanosecond and a notification of a simulation result in the server 14 to the central brain 120 depending on whether a predetermined condition is satisfied. For example, in a case in which a remaining amount of a battery of the vehicle 12 is a predetermined threshold or more, an inquiry is made from the central brain 120 to the server 14 every nanosecond, and in a case in which the remaining amount of the battery of the vehicle 12 is less than the predetermined threshold, the central brain 120 notifies the server 14 to switch to the simulation in the server 14, and the server 14 that has received the notification may sequentially execute the simulation.

In the above-described example, the prediction unit 142 predicts the occurrence of a risk in the case of receiving the request signal output from the central brain 120, but the present disclosure is not limited to such an example.

For example, the central brain 120 may sequentially transmit position information sequentially acquired by a position information sensor provided in the vehicle 12 to the server 14, and the prediction unit 142 of the server 14 may predict the occurrence of a risk corresponding to the position of the vehicle 12 sequentially transmitted from the central brain 120. The term "sequentially" indicates, for example, a nanosecond. In the case of predicting the occurrence of a risk according to the position of the vehicle 12, the prediction unit 142 may change a range from the position of the vehicle 12 according to the type of risk. For example, in the case of a fire, the prediction may be limited to a range of about several meters from the position of the vehicle 12, and in the case of a missile or a nuclear explosion, the prediction may be extended to a range of about several kilometers to several tens of kilometers from the position of the vehicle 12.

In a case in which the prediction unit 142 predicts that the risk occurrence probability is a threshold or more, the notification unit 144 may notify the central brain 120 existing at the position that the risk may occur. The prediction unit 142 may predict a risk occurrence level, and in a case in which the risk occurrence level is a predetermined level or higher, the notification unit 144 may notify that the risk may occur.

The prediction unit 142 predicts the occurrence of a risk according to a position of the vehicle 12, whereby the server 14 can notify an occupant of the vehicle 12 and his/her family of the prediction result of the occurrence of the risk according to a place.

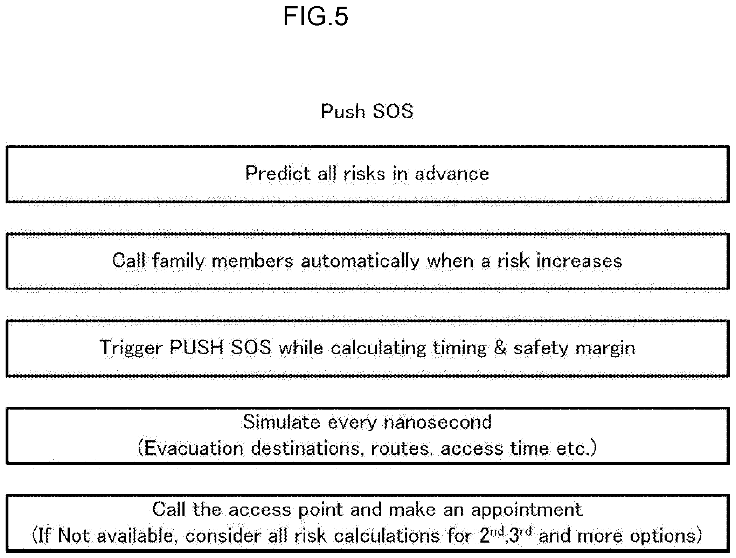

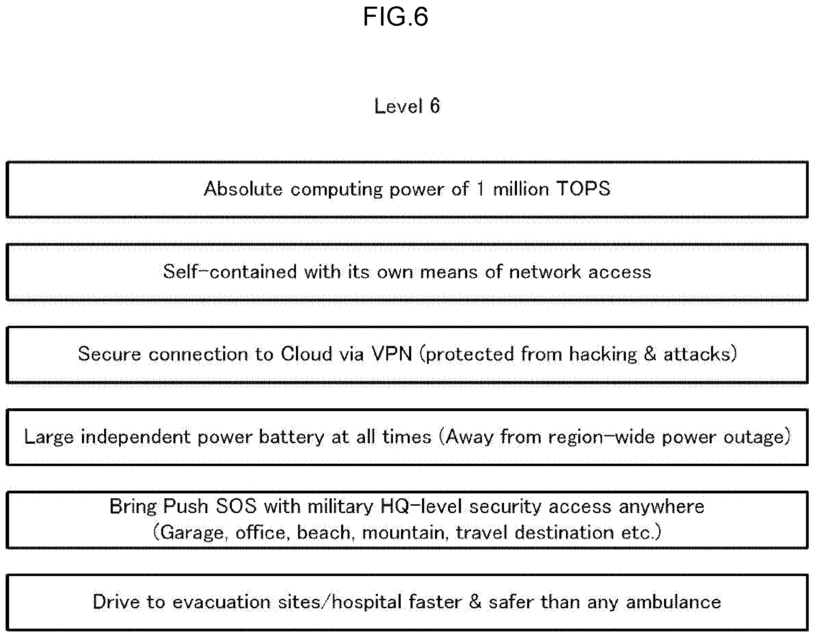

Figs. 5 to 6 are schematic diagrams of the above contents.

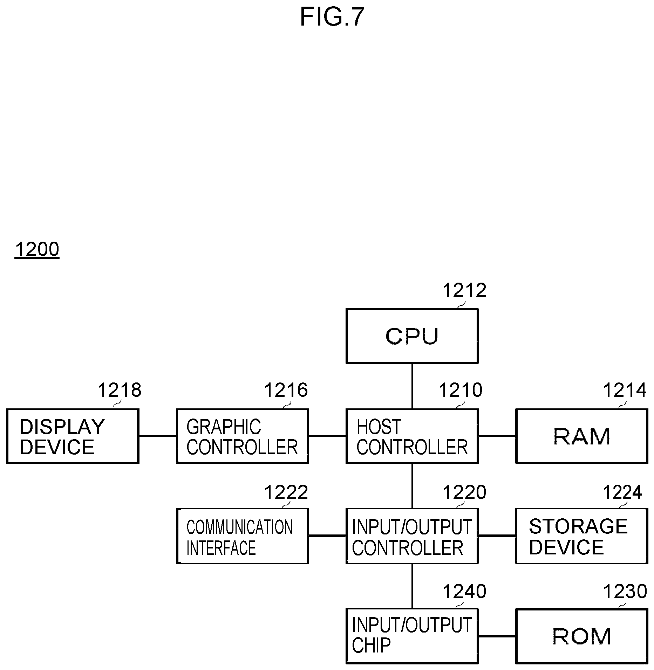

Fig. 7 schematically shows an example of a hardware configuration of a computer 1200 that functions as the control device 120, the central brain 120, the server 14, or a plurality of terminals 18A, 18B, and 18C. A program installed in the computer 1200 can cause the computer 1200 to function as one or more "units" of the device according to the embodiment, or cause the computer 1200 to execute an operation associated with the device according to the embodiment or one or more "units" thereof, and/or cause the computer 1200 to execute a process according to the embodiment or a stage of the process. Such a program may be executed by a CPU 1212 to cause the computer 1200 to execute specific operations associated with some or all of the blocks in the flowcharts and the block diagrams described in the present specification.

The computer 1200 according to the embodiment includes the CPU 1212, a RAM 1214, and a graphic controller 1216, which are mutually connected via a host controller 1210. The computer 1200 also includes input/output units such as a communication interface 1222, a storage device 1224, a DVD drive, and an IC card drive, which are connected to the host controller 1210 via the input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and legacy input/output units such as a keyboard, which are connected to the input/output controller 1220 via an input/output chip 1240.

The CPU 1212 operates according to programs stored in the ROM 1230 and the RAM 1214, thereby controlling each unit. The graphic controller 1216 obtains image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads a program and data from an IC card and/or writes the program and the data to the IC card.

The ROM 1230 stores therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer readable storage medium such as a DVD-ROM or an IC card. The program is read from a computer readable storage medium, installed in the storage device 1224, the RAM 1214, or the ROM 1230, which is also an example of a computer readable storage medium, and executed by the CPU 1212. The information processing described in such a program is read by the computer 1200 and provides cooperation between the program and the various types of hardware resources. A device or a method may be configured by implementing operation or processing of information according to use of the computer 1200.

For example, in a case in which communication is executed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area or the like provided on the recording medium.

The CPU 1212 may cause the RAM 1214 to read the whole or a necessary portion of a file or a database stored in an external recording medium such as the storage device 1224, a DVD drive (DVD-ROM), or an IC card, and may execute various types of processing on data in the RAM 1214. Next, the CPU 1212 may write back the processed data to the external recording medium.

Various types of information such as various types of programs, data, tables, and databases may be stored in a recording medium and subjected to information processing. The CPU 1212 may execute, on the data read from the RAM 1214, various types of processing including various types of operations, information processing, condition determination, conditional branching, unconditional branching, information retrieval/replacement, and the like, which are described throughout the present disclosure and designated by a command sequence of a program, and writes back results thereof to the RAM 1214. The CPU 1212 may search for information in a file, a database, or the like in the recording medium. For example, in a case in which a plurality of entries each having an attribute value of a first attribute associated with an attribute value of a second attribute is stored in the recording medium, the CPU 1212 may search for an entry in which the attribute value of the first attribute matches a designated condition from the plurality of entries, read the attribute value of the second attribute stored in the entry, and thus acquire the attribute value of the second attribute associated with the first attribute satisfying a predetermined condition.

The program or software module described above may be stored in a computer readable storage medium on the computer 1200 or in the vicinity of the computer 1200. A recording medium such as a hard disk or a RAM provided in a server system connected to a dedicated communication network or the Internet can be used as a computer readable storage medium, thereby providing a program to the computer 1200 via the network.

The blocks in the flowcharts and block diagrams in the embodiment may represent stages of a process in which an operation is executed or "units" of a device having a function of executing the operation. Specific stages and "units" may be implemented by a dedicated circuit, a programmable circuit supplied along with computer readable instructions stored on a computer readable storage medium, and/or a processor supplied along with computer readable instructions stored on a computer readable storage medium. Dedicated circuits may include digital and/or analog hardware circuits, and may include integrated circuits (ICs) and/or discrete circuits. Programmable circuits may include reconfigurable hardware circuits including, for example, AND, OR, XOR, NAND, NOR, and other logical operations, flip-flops, registers, and memory elements, such as field programmable gate arrays (FPGA) and programmable logic arrays (PLA).

Computer readable storage media may include any tangible device capable of storing instructions executed by a suitable device, and, as a result, a computer readable storage medium having instructions stored thereon has a product including instructions that may be executed to create means for executing operations designated in the flowcharts or block diagrams. Examples of the computer readable storage medium may include an electronic storage medium, a magnetic storage medium, an optical storage medium, an electromagnetic storage medium, and a semiconductor storage medium. More specific examples of the computer readable storage medium may include a Floppy (registered trademark) disk, a diskette, a hard disk, a random access memory (RAM), a read-only memory (ROM), an erasable programmable read-only memory (an EPROM or a flash memory), an electrically erasable programmable read-only memory (EEPROM), a static random access memory (SRAM), a compact disc read-only memory (CD-ROM), a digital versatile disk (DVD), a Blu-Ray (registered trademark)disk, a memory stick, and an integrated circuit card.

The computer readable instructions may include either source codes or object codes written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), or JAVA (registered trademark), C++, and conventional procedural programming languages such as the "C" programming language or similar programming languages.

The computer readable instructions may be provided to a processor of a general purpose computer, a special purpose computer, or another programmable data processing device, or a programmable circuit locally or via a local area network (LAN) or a wide area network (WAN) such as the Internet, in order to cause the processor of the general purpose computer, the special purpose computer, or another programmable data processing device or the programmable circuit to execute the computer readable instructions to generate means for executing operations designated in the flowcharts or the block diagrams. Examples of the processor include a computer processor, a processing unit, a microprocessor, a digital signal processor, a controller, and a microcontroller.

### [Second Embodiment]

A general cloud includes a lot of artificial intelligences (hereinafter, referred to as "specialized AIs") that is specialized for an event which is a prediction target and that predicts the occurrence of an event related to a crisis that poses a threat to human life, such as the occurrence of the above-described earthquake, large fire, lightning, typhoon, heavy snow, storm, tsunami, missile, nuclear explosion, or war. As described above, the general cloud is always connectable.

Therefore, in the second embodiment, a form example in a case in which prediction results of a crisis from many specialized AIs existing in the general cloud are used will be described. Constituent elements similar to those in the first embodiment are denoted by the same reference numerals as those in the first embodiment, and the description thereof will be omitted as much as possible.

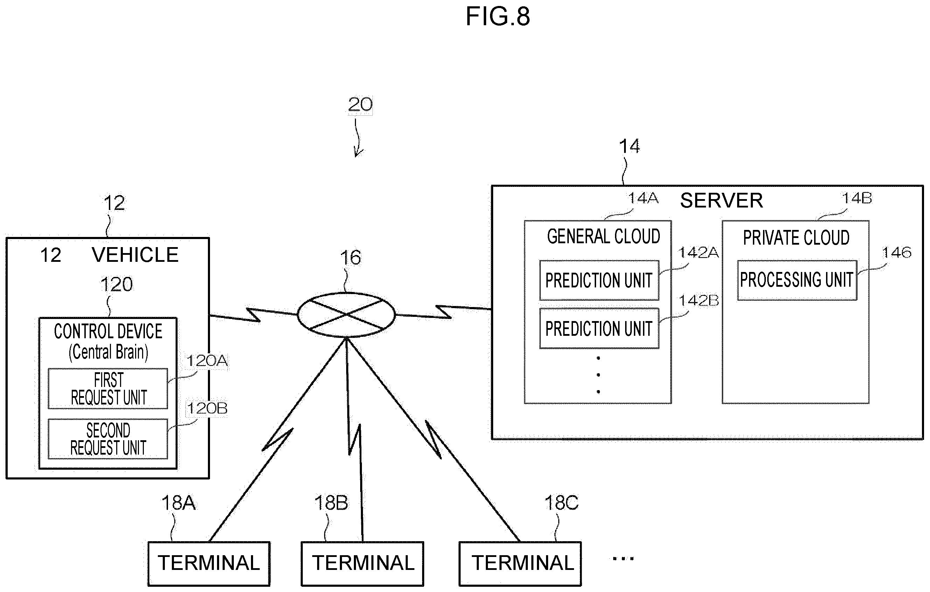

Fig. 8 is a diagram showing an example of a functional configuration of an information processing system 20 according to the present embodiment. As shown in Fig. 8, the information processing system 20 according to the embodiment includes a control device 120 substantially similar to that of the first embodiment in a vehicle 12. However, the control device 120 according to the embodiment is different from the control device 120 according to the first embodiment in that a first request unit 120A and a second request unit 120B are included as functional configurations.

The first request unit 120A according to the embodiment requests a prediction unit that will be described later and is included in a general cloud that is always connectable and predicts the occurrence of an event related to a life-threatening crisis, to predict the occurrence of an event every time a predetermined time (in the embodiment, 1 nanosecond) elapses. Hereinafter, the request from the first request unit 120A will be referred to as a "first request".

In a case in which the occurrence of the event is predicted by the prediction unit as a result of the request from the first request unit 120A, the second request unit 120B according to the embodiment requests a processing unit, which is included in a private cloud and will be described later, to execute processing (hereinafter, referred to as "request corresponding processing") related to the event on at least one of the control device 120 and the plurality of terminals 18A, 18B, and 18C. Hereinafter, the request from the second request unit 120B will be referred to as a "second request".

On the other hand, as shown in Fig. 8, the server 14 according to the embodiment includes the general cloud 14A and the private cloud 14B described above. As described above, in the embodiment, for convenience of description, a case in which the general cloud 14A and the private cloud 14B are realized by one server 14 will be described, but the present invention is not limited thereto. The general cloud 14A and the private cloud 14B may be realized by different servers.

The general cloud 14A according to the embodiment includes a plurality of prediction units 142A, 142B, ... described above that each predict the occurrence of an event related to a life-threatening crisis in response to a request from the first request unit 120A. Hereinafter, in a case in which the prediction units 142A, 142B, ... are described without distinction, the prediction units will be simply collectively referred to as "prediction unit 142". As described above, in the embodiment, for convenience of description, a case in which each of the prediction units 142 is provided in one server 14 will be described, but the invention is not limited thereto. The prediction units 142 may be respectively provided in different servers.

The plurality of prediction units 142 according to the embodiment are assumed to have different types of events to be predicted, but the invention is not limited thereto. For example, two or more prediction units 142 may predict occurrence of the same type of event. The plurality of prediction units 142 predict the occurrence of the same type of event, and thus it is possible to predict the occurrence of the event with higher accuracy.

The prediction unit 142 according to the embodiment determines whether or not the corresponding event will actually occur, for example, by determining whether or not a probability of the occurrence of the event is a predetermined value or more, similarly to the prediction unit 142 of the first embodiment described above. Since a sign of a life-threatening crisis may be ascertained one hour or more before occurrence, this information may be used similarly to the prediction unit 142 according to the first embodiment.

In the embodiment, the prediction unit 142 that predicts the occurrence of the corresponding event by using the above-described dedicated AI is applied, but the invention is not limited thereto. For example, a form in which the occurrence of a plurality of types of events is predicted by a general-purpose AI that predicts the occurrence of the plurality of types of events may be applied as the prediction unit 142.

On the other hand, the private cloud 14B according to the embodiment includes the above-described processing unit 146 that executes the above-described request corresponding processing in response to the request from the second request unit 120B.

In the embodiment, as the request corresponding processing, both processing of providing a notification of information regarding a target event (hereinafter, the processing will be referred to as "first processing") and processing of guiding a person to an access point indicating an evacuation site according to the occurrence of the event (hereinafter, the processing will be referred to as "second processing") are applied, but the invention is not limited thereto. For example, only one of the first processing and the second processing may be applied as the request corresponding processing.

In the embodiment, as the first processing, processing of notifying at least one of the control device 120 and the plurality of terminals 18A, 18B, and 18C of each piece of information of the type of an event that will occur, a probability of the event occurring, a timing of the event occurring, and a place where the event will occur is applied, but the invention is not limited thereto. For example, processing of providing a notification of one of the pieces of information may be applied as the first processing, or processing of providing a notification of a combination of some of the pieces of information may be applied as the first processing.

In the embodiment, as the second processing, processing of notifying at least one of the control device 120 and the plurality of terminals 18A, 18B, and 18C of information for moving to a safe place via a safe route, and processing of causing the control device 120 to automatically cruising the vehicle 12 to the safe place via the safe route are applied, but the invention is not limited thereto. For example, any one of these types of processes may be applied as the second processing.

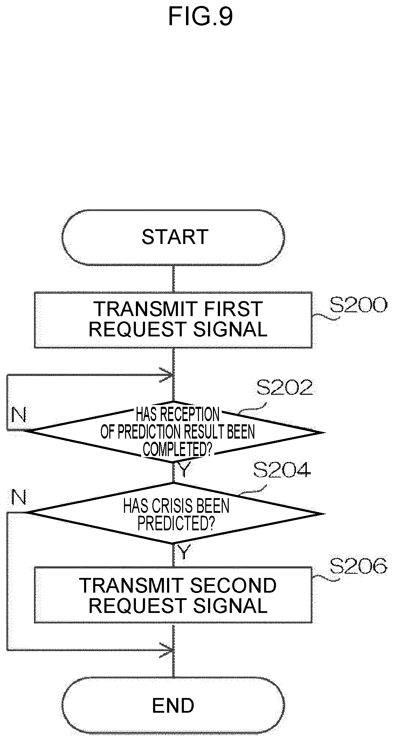

The control device 120 according to the embodiment functions as the first request unit 120A and the second request unit 120B by repeatedly executing a program represented by the flowchart shown in Fig. 9 at predetermined time intervals (In the embodiment, 1 nanosecond). Hereinafter, an operation of the control device 120 according to the embodiment will be described with reference to Fig. 9. Fig. 9 is a flowchart showing an example of a processing routine executed by the control device 120.

In step S200 in Fig. 9, the first request unit 120A of the control device 120 transmits a first request signal indicating the above-described first request to all the prediction units 142 provided in the general cloud 14A. In the case of receiving the first request signal, each of the prediction units 142 predicts the occurrence of an event of a type targeted by the prediction unit, and transmits information indicating a prediction result (hereinafter, referred to as "prediction result information") to the control device 120 that is an access source.

Therefore, in step S202, a control unit (not shown) of the control device 120 waits until reception of the prediction result information from all the prediction units 142 to which the control device has transmitted the first request signal is completed.

In step S204, the control unit of the control device 120 determines, on the basis of the received prediction result information, whether or not there is an event related to a life-threatening crisis that has been determined to actually occur, and ends the present processing routine in a case of a negative determination. Here, in a case in which a positive determination is made, the processing proceeds to step S206.

In step S206, the second request unit 120B of the control device 120 transmits a second request signal indicating the above-described second request to the processing unit 146 provided in the private cloud 14B together with the corresponding prediction result information, and then ends the present processing routine. In the case of receiving the second request signal, the processing unit 146 executes both the first processing and the second processing (request corresponding processing) by using the received prediction result information.

As described above, the information processing system 20 according to the second embodiment predicts the occurrence of an event related to a crisis that poses a threat to the life of a person by using a plurality of dedicated AIs, and causes the private cloud with high security to execute the request corresponding processing. Therefore, it is possible to predict the occurrence of the event with higher accuracy, and to handle the event predicted to occur.

### [Third Embodiment]

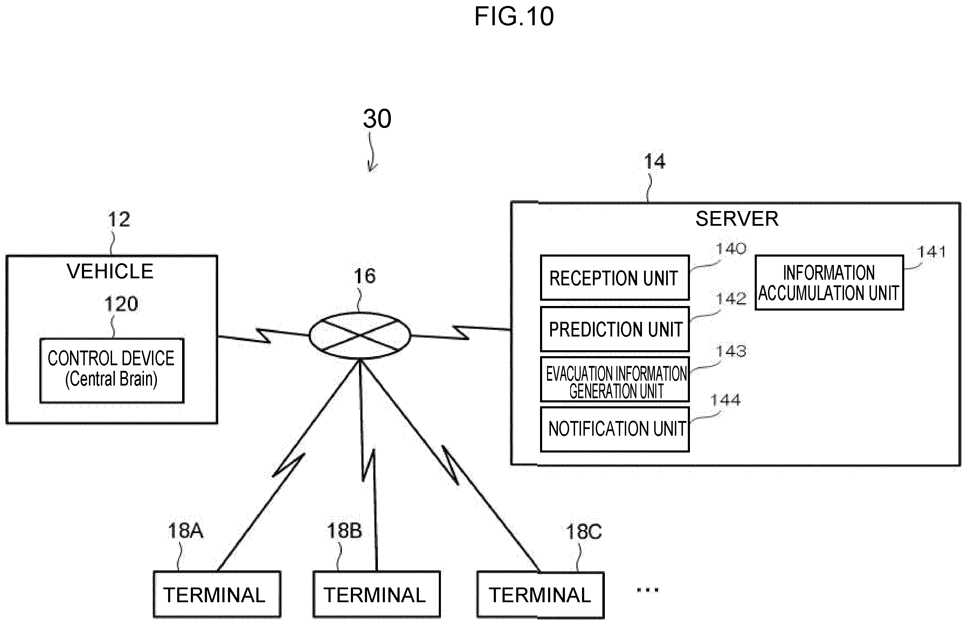

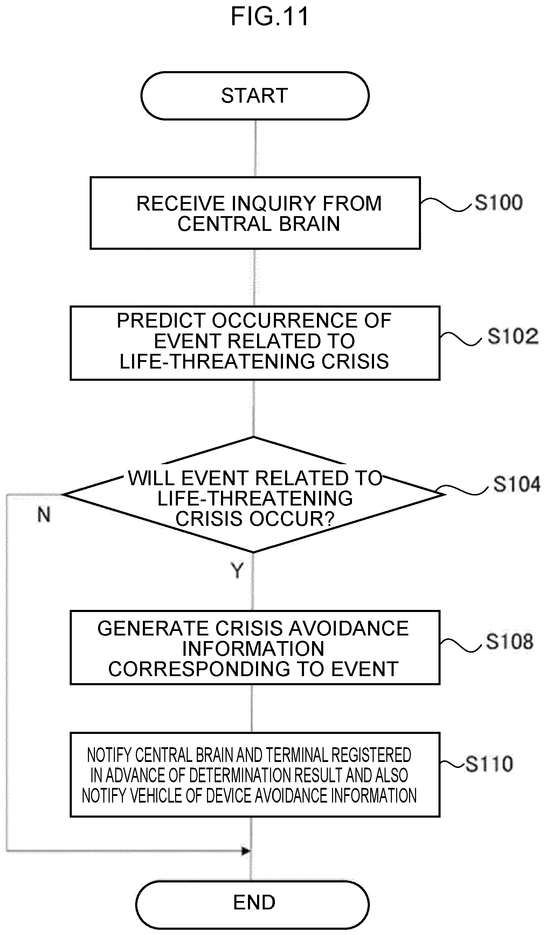

Hereinafter, an information processing system 30 according to a third embodiment will be described with reference to Figs. 10 and 11. The same constituents as those of the first embodiment described above are denoted by the same reference numerals, and the description thereof will be omitted as appropriate.

As shown in Fig. 10, the information processing system 30 according to the third embodiment is characterized in that the server 14 includes a crisis avoidance information generation unit 143 and a notification unit 144B in addition to the reception unit 140, the information accumulation unit 141, and the prediction unit 142 described above.

Specifically, in a case in which the prediction unit 142 determines that an event related to a life-threatening crisis will occur, the crisis avoidance information generation unit 143 generates crisis avoidance information according to the event related to the crisis. In a case in which the prediction unit 142 determines that an event related to a life-threatening crisis will occur, the notification unit 144B notifies the vehicle 12 of the determination result and the crisis avoidance information generated by the crisis avoidance information generation unit 143.

The server 14 repeatedly executes the flowchart shown in Fig. 11.

From step S100 to step S104, processing similar to that of the first embodiment described above is executed.

In step S108, the crisis avoidance information generation unit 143 generates crisis avoidance information corresponding to the event. Examples of the crisis that poses a threat to human life include the occurrence of an earthquake, a large fire, lightning, a typhoon, heavy snow, a storm, a tsunami, a missile, a nuclear explosion, and a war. As described above, the "crisis avoidance information according to an event" is crisis avoidance information according to the type of a crisis such as an earthquake, a large fire, lightning, a typhoon, heavy snow, a storm, a tsunami, a missile, a nuclear explosion, or a war. For example, in a case in which a target crisis is an earthquake, in a case in which an earthquake of a predetermined seismic intensity (for example, seismic intensity 5) or more has occurred, route guidance information for guiding the vehicle 12 to the nearest wide-area evacuation site which is not affected by building collapse is generated. Nearest wide-area evacuation sites include an athletic field, a stadium, a parking lot, and the like. For example, in a case in which a target crisis is a tsunami, route guidance information for guiding the vehicle 12 to the nearest evacuation site located at a height estimated to be safe is generated from a predicted height of a tsunami that will arrive. The route guidance information is information indicating route guidance on a navigation displayed on the display device, and may include voice information. Further, in a case in which a target crisis is a large fire, route guidance information for moving a person away from a fire source is generated. For generation of the guidance information, a route may be generated in consideration of a wind speed and a wind direction after a fire scale and a type of fire (whether the fire is a fire in a chemical factory or a forest fire) are estimated on the basis of position information and information from a news medium. In a case in which a target crisis is a nuclear explosion, route guidance information for guiding a person to the nearest nuclear shelter registered in advance is generated.

In a case in which the crisis avoidance information is generated by the crisis avoidance information generation unit 143 in step S108, the processing proceeds to step S110. In step S110, the notification unit 144B notifies the vehicle 12 of two pieces of information. First, in a case in which the prediction unit 142 determines that a certain event will occur, the notification unit 144B of the server 14 transmits (notifies) the result to the central brain 120 of the vehicle 12. In this case, at least one of the plurality of terminals 18A, 18B, and 18C may be notified of the determination result. The terminals 18A, 18B, and 18C include, for example, mobile terminals. The notification unit 144B also notifies the central brain 120 of the vehicle 12 of the crisis avoidance information generated by the crisis avoidance information generation unit 143 together with the previous determination result. In this case, at least one of the plurality of terminals 18A, 18B, and 18C may be notified of the crisis avoidance information.

The central brain 120 outputs information indicating that the event related to a life-threatening crisis will occur and the crisis avoidance information to a display device (not shown) or the like in the vehicle 12. An occupant in the vehicle 12 checks the information, and heads to an evacuation site according to the route guidance information regarding the evacuation site indicated as the crisis avoidance information.

Each of the plurality of terminals 18A, 18B, and 18C is, for example, a terminal owned by a family member of an occupant of the vehicle 12. Each of the plurality of terminals 18A, 18B, and 18C outputs, to its own display device (not shown) or the like, the information indicating that an event related to a life-threatening crisis will occur and the crisis avoidance information indicating an evacuation site to which the vehicle 12 is to be headed. The family member of the occupant can check the information and check the evacuation site or the like to which the vehicle 12 is to be headed.

As described above, the server 14 notifies the vehicle 12 on which the central brain 120 is mounted and the plurality of terminals 18A, 18B, and 18C owned by members (for example, family members) registered in advance of the occurrence of the crisis and the crisis avoidance information. At that time, the server 14 may provide a notification of the degree of risk of the crisis and the time taken to reach the evacuation site. The server 14 may make a phone call and make an appointment to an access destination, and may contact second and third candidate access points in a case in which the access destination cannot be contacted.

As described above, in a case in which an event related to a life-threatening crisis is predicted to occur, the information processing system 30 and the like according to the embodiment generates crisis avoidance information according to the event, transmits the information to the central brain 120 of the vehicle 12, and notifies an occupant of the information via a display device or the like. As a result, according to the embodiment, it is possible to appropriately evacuate the vehicle 12 on which the occupant rides in a case in which the occurrence of an event related to a life-threatening crisis is predicted.

In the above embodiment, the vehicle 12 or the like is simply notified of the route guidance information regarding the nearest evacuation site as the crisis avoidance information, but the invention is not limited thereto, and the following may be performed. For example, in a case in which it is predicted that a plurality of types of crises will occur at the same time, a notification of guidance information to an evacuation site where all of the crises can be avoided may be provided, or the prediction unit 142 may calculate a priority of a crisis, and a notification of both guidance information to an evacuation site where a high priority crisis can be avoided and guidance information to an evacuation site where all of the crises can be avoided may be provided. As the priority, for example, in a case in which two types of an earthquake and a tsunami are target crises, when the vehicle 12 is present within a predetermined distance from a coast and the height from the sea surface is within a predetermined height on the basis of position information of the vehicle 12, the priority of the tsunami may be set to the highest, and a notification of route guidance information regarding the nearest evacuation site where the tsunami can be avoided may be provided. On the other hand, in a case in which the vehicle 12 is present in an area where the distance from the coast exceeds a predetermined distance and the height from the sea surface exceeds a predetermined height on the basis of the position information of the vehicle 12, the priority order of the tsunami may be lowered, and a notification of route guidance information regarding the nearest evacuation site where the risk of building collapse due to an earthquake (for example, seismic intensity 5 or more) is low may be provided.

### [Fourth Embodiment]

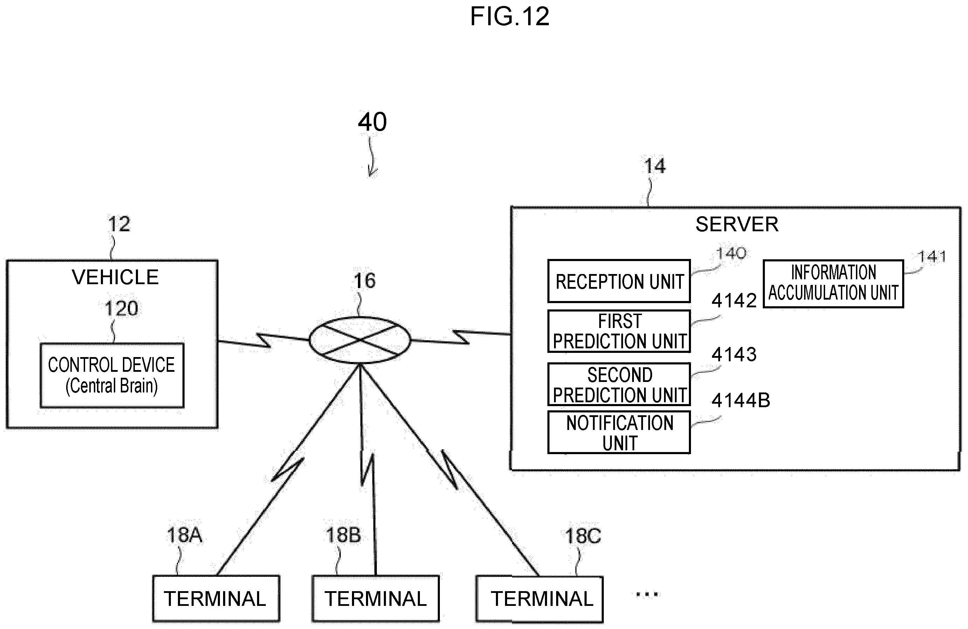

As shown in Fig. 12, an information processing system 40 according to a fourth embodiment is different from the first embodiment in that the server 14 functions as a first prediction unit 4142, a second prediction unit 4143, and a notification unit 4144B instead of the prediction unit 142 and the notification unit 144 described in the first embodiment.

The first prediction unit 4142 predicts the degree of risk of occurrence of an event related to a life-threatening crisis, similarly to the prediction unit 142 described in the first embodiment. The prediction can be performed, for example, with reception of a request signal from a control device (central brain) 120 mounted on the vehicle 12 as a trigger. In the prediction of the first prediction unit 4142, in general, the degree of risk predicted increases as the time of occurrence of an event related to a life-threatening crisis approaches, and the degree of risk becomes the maximum value in a case in which the current time reaches the time of occurrence of the event. In the embodiment, in a case in which the degree of risk exceeds a threshold less than the maximum value at a timing before the current time becomes the occurrence time of the event, notification information regarding the prediction result is transmitted.

In a case of receiving a request signal from the control device (central brain) 120, the second prediction unit 4143 collects position information of the vehicle 12 on which the control device (central brain) 120 is mounted, the position information being included in the received request signal. The second prediction unit 4143 predicts a density of the vehicles 12 from the collected position information of the individual vehicles 12. The density predicted by the second prediction unit 4143 is, for example, information digitized by an index based on a population density, the number of vehicles per unit area, a distance to other vehicles, and the like.

The notification unit 4144B transmits notification information regarding the prediction result from the first prediction unit 4142 to the vehicle 12 and the mobile terminal in a case in which the degree of risk of occurrence of the event predicted to occur by the first prediction unit 4142 exceeds a first threshold, and decreases the first threshold in a case in which the density of the vehicles 12 predicted by the second prediction unit 4143 exceeds a second threshold.

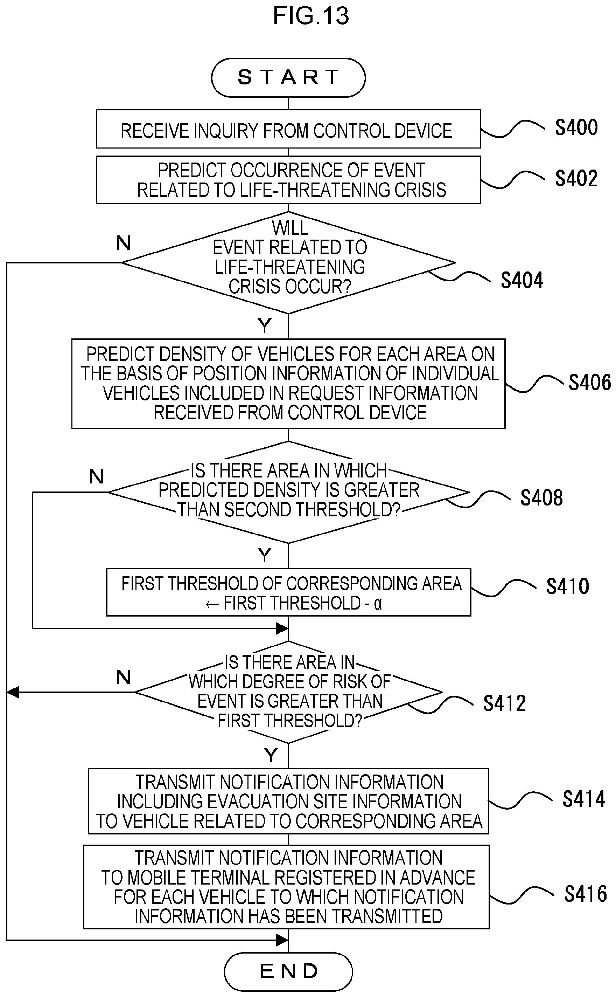

Next, processing executed by the server 14 according to the fourth embodiment will be described with reference to Fig. 13.

In step S400, the reception unit 140 receives a request signal output from the control device (central brain) 120.

In step S402, in a case in which the request signal output from the control device (central brain) 120 is received, the first prediction unit 4142 predicts the degree of risk of occurrence of an event related to a life-threatening crisis on the basis of various types of information stored in the information accumulation unit 141.

In the fourth embodiment, a plurality of servers 14 are provided (not shown), and the individual servers 14 are different from each other in prediction target regions for predicting the degree of risk of occurrence of an event related to a life-threatening crisis. The prediction target region corresponding to each of the servers 14 is divided into a plurality of prediction areas, and the first prediction unit 4142 may predict the occurrence of an event related to a life-threatening crisis for each of the prediction areas by calculating the degree of risk at which the event related to the life-threatening crisis will occur for each of the prediction areas. As an example, in a case in which the event related to a life-threatening crisis is a "tsunami", the calculated degree of risk is higher in a prediction area facing the sea than in a prediction area in the inland.

In step S404, the second prediction unit 4143 determines whether the first prediction unit 4142 has predicted that an event related to a life-threatening crisis will occur. In a case in which the determination in step S404 is negative, the processing shown in Fig. 9 is ended. In a case in which the determination in step S404 is positive, the processing proceeds to step S406. The determination in step S404 may be made on the basis of, for example, whether or not there is a prediction area in which the calculated degree of risk is a predetermined value or more.

In step S406, the second prediction unit 4143 predicts the density of the vehicles 12 for each prediction area on the basis of position information of each of the vehicles 12 on which the control device (central brain) 120 is mounted, the position information being included in the request signal received from the control device (central brain) 120. The prediction of the density of the vehicles 12 in step S406 may be performed by, for example, assuming that each vehicle 12 moves to the nearest evacuation site on the basis of the position information of each vehicle 12, and repeatedly calculating the density of the vehicles 12 in time series by predicting the number of vehicles 12 after a predetermined time in the prediction area.

In step S408, the notification unit 4144B determines whether there is a prediction area in which the density of the vehicle 12 predicted by the second prediction unit 4143 exceeds a preset second threshold. In a case in which the determination in step S408 is negative, the processing proceeds to step S412, and in a case in which the determination in step S408 is positive, the processing proceeds to step S410.

In step S410, the notification unit 4144B performs processing of subtracting a predetermined value α from the first threshold corresponding to each of all the prediction areas in which the density of the vehicles 12 predicted by the second prediction unit 4143 exceeds the second threshold.

In step S412, the notification unit 4144B determines whether or not there is a prediction area in which the degree of risk of occurrence of an event related to a life-threatening crisis exceeds the first threshold. In a case in which the determination in step S412 is negative, the processing shown in Fig. 9 is ended. In a case in which the determination in step S412 is positive, the processing proceeds to step S414.

In step S414, the notification unit 4144B transmits notification information including evacuation site information to the vehicle 12 related to the prediction area in which the degree of risk of occurrence of an event related to a life-threatening crisis exceeds the first threshold. As a result, in the vehicle 12 on which the control device (central brain) 120 that has received the notification information is mounted, the occupant is notified of the occurrence of the event related to the life-threatening crisis, and moves (evacuates) the vehicle 12 to the evacuation site of which a notification is provided at the same time.

In step S414 described above, examples of the vehicle 12 related to the prediction area in which the degree of risk of the occurrence of the event related to the life-threatening crisis exceeds the first threshold include at least one of the vehicle 12 located in the prediction area, the vehicle 12 that passes through the prediction area and moves to the evacuation site, and the vehicle 12 for which the evacuation site is located in the prediction area.

In the fourth embodiment, related mobile terminals 18A, 18B, and 18C (for example, mobile terminals 18A, 18B, and 18C possessed by family members of an owner of the vehicle 12) are registered in advance for the vehicle 12 on which the control device (central brain) 120 is mounted. In the next step S416, the notification unit 4144B transmits the notification information to the mobile terminals 18A, 18B, and 18C registered in advance for each vehicle 12 to which the notification information has been transmitted, and ends the processing shown in Fig. 9.

As a result, in the mobile terminals 18A, 18B, and 18C that have received the notification information, people possessing the mobile terminals 18A, 18B, and 18C recognize that an event related to a life-threatening crisis has occurred, and move (evacuate) to the evacuation site of which a notification is provided at the same time. As for the notification information to be transmitted to the mobile terminals 18A, 18B, and 18C, after the current positions of the mobile terminals 18A, 18B, and 18C are checked by temporarily communicating with the mobile terminals 18A, 18B, and 18C, notification information including information regarding evacuation sites corresponding to the checked current positions may be transmitted to the mobile terminals 18A, 18B, and 18C.

As described above, in the fourth embodiment, the first prediction unit 4142 predicts the degree of risk of occurrence of an event related to a life-threatening crisis, and the second prediction unit 4143 predicts the density of the vehicles 12 on the basis of the collected position information of the vehicles 12. The notification unit 4144B transmits notification information regarding a prediction result from the first prediction unit 4142 to the vehicle 12 and the mobile terminals 18A, 18B, and 18C in a case in which the degree of risk of occurrence of the event predicted to occur by the first prediction unit 4142 exceeds the first threshold, and decreases the first threshold in a case in which the density of the vehicles 12 predicted by the second prediction unit 4143 exceeds the second threshold. As a result, a notification of the notification information to at least one of the vehicle 12 and the mobile terminals 18A, 18B, and 18C is provided earlier than in a case in which the first threshold is not decreased, and it is possible to curb a situation in which vehicles and people are in a dense state in a case in which the occurrence of an event related to a life-threatening crisis is predicted.

In the fourth embodiment, in a case in which a request signal is received from the control device (central brain) 120 mounted on the vehicle 12, the first prediction unit 4142 predicts the degree of risk of occurrence of an event related to a life-threatening crisis on the basis of information stored in the information accumulation unit 141. As a result, the server 14 can recognize the vehicle 12 to which the notification information is to be transmitted, for example, the vehicle 12 in an active state in which an occupant is in the vehicle and an ignition switch is turned on.

In the fourth embodiment, the notification information regarding the prediction result from the first prediction unit 4142 includes evacuation site information indicating an evacuation site for at least one of the vehicle 12 or people who possess the mobile terminals 18A, 18B, and 18C. As a result, the evacuation site information included in the notification information can guide the vehicle 12 or the people who possess the mobile terminals 18A, 18B, and 18C to evacuate to an appropriate evacuation site.

In the fourth embodiment, the second prediction unit 4143 predicts the density in units of each of a plurality of prediction areas formed by dividing a prediction target region, and the notification unit 4144B decreases the first threshold corresponding to a specific prediction area in which the density predicted by the second prediction unit 4143 exceeds the second threshold, and transmits notification information regarding a prediction result from the first prediction unit 4142 to at least one of the vehicle 12 and the mobile terminals 18A, 18B, and 18C related to the specific prediction area in a case in which the degree of risk of occurrence of the event predicted by the first prediction unit 4142 exceeds the first threshold corresponding to the specific prediction area. As a result, in a case in which the occurrence of an event related to a life-threatening crisis is predicted, it is possible to curb a situation in which vehicles and people are in a dense state in units of prediction areas smaller than the prediction target area.

In the fourth embodiment, the aspect in which the first prediction unit 4142 predicts the degree of risk of occurrence of an event related to a life-threatening crisis for each prediction area has been described, but the present disclosure is not limited thereto. For example, the degree of risk of occurrence of an event related to a life-threatening crisis may be predicted in units of prediction target regions wider than a prediction area.

In the fourth embodiment, the aspect has been described in which the second prediction unit 4143 performs the processing of predicting the density of the vehicles 12 on the basis of the collected position information of the vehicles 12 in a case in which the occurrence of the event related to the life-threatening crisis is predicted by the first prediction unit 4142 (in a case in which the determination in step S404 is positive). However, the present disclosure is not limited to this aspect, and for example, the second prediction unit 4143 may constantly perform the above processing regardless of whether or not the occurrence of the event is predicted by the first prediction unit 4142.

In the fourth embodiment, the aspect in which the second prediction unit 4143 predicts the density of the vehicles 12 on the basis of the collected position information of the vehicles 12 has been described, but the present disclosure is not limited thereto. For example, the second prediction unit 4143 may collect position information of the mobile terminals 18A, 18B, and 18C, and predict the density of people possessing the mobile terminals 18A, 18B, and 18C on the basis of the collected position information of the mobile terminals 18A, 18B, and 18C. The second prediction unit 4143 may predict each of the density of the vehicles 12 and the density of the people possessing the mobile terminals 18A, 18B, and 18C.

In the fourth embodiment, the aspect has been described in which the related mobile terminals 18A, 18B, and 18C (for example, mobile terminals 18A, 18B, and 18C possessed by family members of an owner of the vehicle 12) are registered in advance for each individual vehicle 12, and the notification unit 4144B transmits the notification information to the mobile terminals registered in advance for each vehicle 12 to which the notification information has been transmitted. However, the present disclosure is not limited thereto. For example, the notification unit 4144B may transmit the notification information to the mobile terminals 18A, 18B, and 18C of which position information has been collected.

In the fourth embodiment, the evacuation site information included in the notification information may include evacuation route information indicating a route to the evacuation site. As a result, an occupant of the vehicle 12 on which the control device (central brain) 120 that has received the notification information is mounted or people possessing the mobile terminals 18A, 18B, and 18C can evacuate to the evacuation site along an appropriate evacuation route with reference to the evacuation route information.

Although the present disclosure has been described with reference to the embodiments, the technical scope of the present disclosure is not limited to the scope described in the embodiments. It is apparent to those skilled in the art that various modifications or improvements can be made to the above embodiments. It is apparent from the description of the claims that an aspect to which such modifications or improvements are added can also be included in the technical scope of the present disclosure.

It should be noted that the order of execution of each piece of processing of operations, procedures, steps, stages, and the like in the devices, the systems, the programs, and the methods shown in the claims, the specification, and the drawings can be realized in any order unless "before", "prior to", or the like is explicitly stated, and unless the output of the previous processing is used in the later processing. Even if the operation flow in the claims, the specification, and the drawings is described using "first,", "next,", and the like for convenience, this does not mean that it is essential to perform in this order.

The disclosure of Japanese Patent Application No. 2022-164370 filed on October 12, 2022, the disclosure of Japanese Patent Application No. 2022-178315 filed on November 7, 2022, the disclosure of Japanese Patent Application No. 2022-181229 filed on November 11, 2022, the disclosure of Japanese Patent Application No. 2022-182101 filed on November 14, 2022, the disclosure of Japanese Patent Application No. 2023-2662 filed on January 11, 2023, and the disclosure of Japanese Patent Application No. 2023-4745 filed on January 16, 2023 are incorporated herein by reference in their entirety.

### Reference Signs List

- 120: Control device
- 14: Server, Terminal 18A, 18B, 18C
- 1200: Computer
- 1210: Host controller
- 1212: CPU
- 1214: RAM
- 1216: Graphic controller
- 1218: Display device
- 1220: Input/output controller
- 1222: Communication interface
- 1224: Storage device
- 1230: ROM
- 1240: Input/output chip

## Claims

1. An information processing system comprising:
a central brain mounted on a vehicle;
an information accumulation unit on a cloud that stores information regarding a life-threatening crisis; and
a prediction unit on the cloud that predicts occurrence of an event related to the life-threatening crisis on a basis of information in the information accumulation unit, wherein
the central brain makes an inquiry to the prediction unit every nanosecond, and
in a case in which the prediction unit determines that the event related to the life-threatening crisis will occur, the prediction unit reports a determination result to the vehicle and a contact address registered in advance.

2. The information processing system according to claim 1, wherein
the central brain sequentially transmits position information of the vehicle to the cloud, and
the prediction unit predicts occurrence of the event according to the position information, and reports a determination result to the vehicle present at the position and the contact address registered in advance.

3. An information processing device in an information processing system including a control device mounted on a vehicle, the information processing device, and a plurality of terminals, wherein
the control device outputs a request signal to the information processing device every time a predetermined time elapses, and
the information processing device
predicts occurrence of an event related to a life-threatening crisis on a basis of various types of information stored in a storage unit in a case in which the request signal output from the control device is received, and
determines that the event will occur in a case in which a probability of the occurrence of the event is a predetermined value or more, and notifies at least one of the control device and the plurality of terminals of a determination result.

4. The information processing device according to claim 3, wherein
the information processing device further notifies at least one of the control device and the plurality of terminals of information regarding an access point indicating an evacuation site for the vehicle.

5. The information processing device according to claim 3, wherein
the control device sequentially outputs position information of the vehicle to the information processing device, and
the information processing device predicts occurrence of the event according to the position information, and notifies at least one of the control device and the plurality of terminals present at the position of a determination result.

6. A program for causing a computer to function as the information processing device according to any one of claims 3 to 5.

7. An information processing system comprising:
a central brain and a gateway mounted on a vehicle;
an information accumulation unit on a cloud that stores information regarding a life-threatening crisis; and
a prediction unit on the cloud that predicts occurrence of an event related to the life-threatening crisis on a basis of information in the information accumulation unit, wherein
the prediction unit predicts the occurrence of an event every nanosecond, and
in a case in which the prediction unit determines that the event related to the life-threatening crisis will occur, the prediction unit reports a determination result to which information indicating the occurrence of the event is added to the vehicle and a contact address registered in advance, and
the gateway transfers the determination result to the central brain in a case in which the information indicating the occurrence of the event is added.

8. An information processing device in an information processing system including a control device mounted on a vehicle, the information processing device, and a plurality of terminals, wherein
the information processing device predicts occurrence of an event related to a life-threatening crisis on a basis of various types of information stored in a storage unit every time a predetermined time elapses, and
determines that the event will occur in a case in which a probability of the occurrence of the event is a predetermined value or more, and notifies at least one of the control device and the plurality of terminals of a determination result to which information indicating the occurrence of the event is added.

9. The information processing device according to claim 8, wherein
the information processing device predicts the occurrence of the event related to the life-threatening crisis in a case in which a remaining amount of a battery of the vehicle is less than a predetermined threshold.

10. The information processing device according to claim 9, wherein
the information processing device further notifies at least one of the control device and the plurality of terminals of information regarding an access point indicating an evacuation site for the vehicle.

11. A program for causing a computer to function as the information processing device according to any one of claims 8 to 10.

12. A control device mounted on a vehicle, the control device comprising:
a first request unit that requests a prediction unit that is present in a general cloud that is connectable at all times and predicts occurrence of an event related to a life-threatening crisis to predict the occurrence of the event every time a predetermined time elapses; and
a second request unit that requests a processing unit present in a private cloud to execute processing related to the event on at least one of an own device and a plurality of predetermined terminals in a case in which the event is predicted to occur by the prediction unit as a result of the request from the first request unit.

13. The control device according to claim 12, wherein
the processing related to the event is at least one of processing of notifying information regarding the event and processing of guiding a person to an access point indicating an evacuation site according to the occurrence of the event.

14. An information processing system comprising:
the control device according to claim 12 or 13;
the prediction unit;
the processing unit; and
the plurality of terminals.

15. A program for causing a computer to function as the control device according to claim 12 or 13.

16. An information processing system comprising:
a control device mounted on a vehicle;
an information accumulation unit on a cloud that stores information regarding a life-threatening crisis;
a prediction unit on the cloud that receives an inquiry from the control device at predetermined time intervals and predicts occurrence of an event related to life-threatening information on a basis of information in the information accumulation unit;
a crisis avoidance information generation unit that generates, in a case in which the prediction unit determines that the event related to the life-threatening crisis will occur, crisis avoidance information corresponding to the event related to the crisis; and
a notification unit that notifies the vehicle of a determination result and the crisis avoidance information generated by the crisis avoidance information generation unit in a case in which the prediction unit determines that the event related to the life-threatening crisis will occur.

17. The information processing system according to claim 16, wherein
the notification unit also notifies a contact address registered in advance of the determination result and the crisis avoidance information.

18. An information processing device in an information processing system including a control device mounted on a vehicle and the information processing device, wherein
the control device outputs a request signal to the information processing device every time a predetermined time elapses, and
the information processing device
predicts occurrence of an event related to a life-threatening crisis on a basis of various types of information stored in a storage unit in a case in which the request signal output from the control device is received, and
determines that the event will occur in a case in which a probability of the occurrence of the event is a predetermined value or more, and notifies the control device of a determination result and crisis avoidance information corresponding to the event related to the crisis.

19. The information processing device according to claim 18, wherein
the information processing device also notifies a contact address registered in advance of the determination result and the crisis avoidance information.

20. A program for causing a computer to function as the information processing device according to claim 18 or 19.

21. An information processing device comprising:
a first prediction unit that predicts a degree of risk of occurrence of an event related to a life-threatening crisis;
a second prediction unit that predicts a density of at least one of a vehicle and a person who possesses a mobile terminal on a basis of collected position information of at least one of the vehicle and the mobile terminal; and
a notification unit that transmits notification information regarding a prediction result from the first prediction unit to at least one of the vehicle and the mobile terminal in a case in which the degree of risk of the occurrence of the event predicted to occur by the first prediction unit exceeds a first threshold, and decreases the first threshold in a case in which the density predicted by the second prediction unit exceeds a second threshold.

22. The information processing device according to claim 21, wherein the first prediction unit predicts the degree of risk of the occurrence of the event related to the life-threatening crisis on a basis of information stored in a storage unit in a case in which a request signal is received from a control device mounted on the vehicle.

23. The information processing device according to claim 21, wherein the notification information regarding the prediction result from the first prediction unit includes evacuation site information indicating an evacuation site for at least one of the vehicle and the person who possesses the mobile terminal.

24. The information processing device according to claim 21, wherein
the second prediction unit predicts the density in units of each of a plurality of prediction areas formed by dividing a prediction target region, and
the notification unit decreases the first threshold corresponding to a specific prediction area in which the density predicted by the second prediction unit exceeds the second threshold, and transmits notification information regarding the prediction result from the first prediction unit to at least one of the vehicle and the mobile terminal related to the specific prediction area in a case in which the degree of risk of the occurrence of the event predicted to occur by the first prediction unit exceeds the first threshold corresponding to the specific prediction area.

25. An information processing system comprising:
the information processing device according to any one of claims 21 to 24;
a control device mounted on the vehicle; and
the mobile terminal.

26. A program for causing a computer to execute processing comprising:
predicting a degree of risk of occurrence of an event related to a life-threatening crisis;
predicting a density of at least one of a vehicle and a person who possesses a mobile terminal on a basis of collected position information of at least one of the vehicle and the mobile terminal; and
transmitting notification information regarding a prediction result of the occurrence of the event related to the life-threatening crisis to at least one of the vehicle and the mobile terminal in a case in which the degree of risk of the occurrence of the event predicted to occur exceeds a first threshold, and decreasing the first threshold in a case in which the predicted density exceeds a second threshold.
